**Europäisches Patentamt**

**European Patent Office**

**Office européen des brevets**

(11) Veröffentlichungsnummer: **0 166 395**
**B1**

(12) **EUROPÄISCHE PATENTSCHRIFT**

(45) Veröffentlichungstag der Patentschrift:
20.04.88

(51) Int. Cl.⁴: **G 01 F 1/58,** G 01 F 1/60

(21) Anmeldenummer: 85107723.0

(22) Anmeldetag: 21.06.85

(54) **Magnetisch-induktives Durchflussmessverfahren.**

(30) Priorität: 22.06.84 DE 3423076

(43) Veröffentlichungstag der Anmeldung:
02.01.86 Patentblatt 86/1

(45) Bekanntmachung des Hinweises auf die Patenterteilung:
20.04.88 Patentblatt 88/16

(84) Benannte Vertragsstaaten:
AT CH FR GB IT LI NL

(56) Entgegenhaltungen:
DE - A - 3 335 587
DE - B - 2 744 845

(73) Patentinhaber: BOPP & REUTHER GMBH,
Carl-Reuther-Strasse 1, D-6800 Mannheim 31 (DE)

(72) Erfinder: Milsch, Ulrich, Dipl.-Ing., Stadtgraben 35,
D-7520 Bruchsal (DE)
Erfinder: Pohlig, Wolf-Dietrich, Dr., Rosenstrasse 16,
D-6948 Siedelsbrunn (DE)

## Beschreibung

Die Erfindung bezieht sich auf ein Verfahren zur magnetisch-induktiven Durchflussmessung, bei dem das strömende, elektrisch leitende Medium in einem elektrisch isolierten Rohrabschnitt von einem magnetischen Feld durchsetzt wird, das von einer durch einen periodisch pulsierenden Gleichstrom gespeisten Erregerwicklung erzeugt wird, und eine induzierte, der Strömungsgeschwindigkeit proportionale Nutzspannung zusammen mit einer Störspannung während jeder Halbperiode des pulsierenden Gleichstromes über eine bestimmte Abtastzeit an zwei Elektroden des Rohrabschnitts abgetastet sowie im Umformer integriert wird und die Integrationswerte miteinander verglichen werden, wobei sich die Störwechselspannungs- und Störgleichspannungsanteile kompensieren.

Bei einem solchen bekannten Verfahren zur magnetisch-induktiven Durchflussmessung werden die unvermeidlichen Störwechselspannungen, die in Europa üblicherweise mit einer Netzfrequenz von 50 Hz auftreten, während jeder Halbperiode des Erregerstromes zu Null integriert, indem als Abtast- bzw. Integrationszeit für die Messspannung die Periodendauer der Störwechselspannung oder ein ganzzahliges Vielfaches hiervon gewählt wird. Während dieser der Periodendauer der Störwechselspannung angepassten Integrationszeit heben sich die positiven und negativen Halbwellen der Störwechselspannung gegeneinander auf, so dass der Mittelwert der die Nutzspannung überlagernden Störwechselspannung Null wird.

Die sich bei der Abtastung der Messspannung U während der positiven und der negativen Halbperiode des Erregerstromes ergebenden Integrationswerte enthalten nach der Eliminierung der Störwechselspannung $U_s$ noch die ebenfalls auftretenden Störgleichspannungsanteile $U_g$. Diese Störgleichspannung $U_g$ wird bei dem bekannten Verfahren im zweiten Verfahrensschritt dadurch kompensiert, dass die Differenz aus dem positiven und dem negativen Integrationswert gebildet wird, woraus sich die reine Nutzspannung $U_n$ ergibt.

Dieses bekannte Messverfahren mit geschaltetem Gleichfeld hat den Nachteil, dass sehr schnelle Durchflussänderungen oder pulsierende Strömungen nicht mehr richtig erfasst werden können, so dass es hier zu erheblichen Messfehlern kommen kann. Da bei einer Störspannungsfrequenz von 50 Hz und zweimaliger Erfassung des Messwertes je Erregerperiode die Abtastung jeweils einer ganzen Störperiode allein 40 ms und die Abtastung zweier Störperioden sogar 80 ms benötigt und für das Einschwingen des magnetischen Feldes beim Einschalten oder Umschalten des Erregerstromes weitere Zeit verloren geht, arbeitet man in der Praxis bei der magnetisch-induktiven Durchflussmessung mit geschaltetem Feld mit Erregerfrequenzen von $8\frac{1}{3}$ Hz bis zu $3\frac{1}{8}$ Hz. Der zeitliche Abstand zwischen zwei abgegebenen Durchflussmesswerten beträgt hier 120 bis 320 ms und die Totzeit zwischen zwei Abtastungen beläuft sich somit auf 60 bis 160 ms. Plötzliche Durchfluss- bzw. Geschwindigkeitseinbrüche oder -anstiege treten häufig in wesentlich kürzeren Zeitabständen auf, so dass die Zahl der Abtastungen pro Sekunde, d. h. die Abtastrate bei dem bekannten Messverfahren mit geschaltetem Feld zu gering ist, um hier ein genaues Messergebnis zu erzielen.

Auch bei kurzzeitigen Durchflussmessungen, wie sie beim Dosieren vorkommen, werden die Messfehler mit abnehmender Dosierzeit immer grösser. Beispielsweise liegen die Dosierzeiten beim Abfüllen von Getränken, Arzneiflüssigkeiten oder fliessfähigen Lebensmitteln in gebrauchsfertigen Mengen heute schon teilweise unter einer Sekunde, so dass ohne eine ausreichende Anzahl von Messwerten pro Dosiertakt keine genaue Dosierung möglich ist.

Abgesehen hiervon ist bei den bekannten magnetisch-induktiven Durchflussmessverfahren mit geschaltetem Feld die Einschaltdauer des Erregerstromes und damit die Leistungsaufnahme des Gerätes hoch, so dass relativ viel elektrische Energie für die Erregung des magnetischen Feldes benötigt wird.

Aufgabe der Erfindung ist es, ein magnetischinduktives Durchflussmessverfahren nach dem Oberbegriff der Patentansprüche 1 und 2 so zu verbessern, dass bei einfachster Eliminierung der in der Messspannung enthaltenen Störwechsel- und Störgleichspannungsanteile auch noch sehr schnelle Durchflussänderungen genau erfasst werden können und gleichzeitig an elektrischer Energie für die Erregung des magnetischen Feldes gespart wird.

Zur Lösung dieser Aufgabe werden zwei in den beiden Ansprüchen 1 und 2 gekennzeichnete Verfahren vorgeschlagen.

Bei dem Verfahren nach Patentanspruch 1 wird durch die Verdoppelung oder Vervielfachung der Erregerfrequenz und damit der mit der Erregerfrequenz übereinstimmenden Nutzspannungsfrequenz gegenüber der Störspannungsfrequenz die Zahl der Abtastungen des Durchflussmesswertes pro Zeiteinheit vervielfacht, so dass auch schnelle Durchflussänderungen jetzt sicher abgestastet werden können. Die noch genau zu erfassende Durchflussänderung kann hierbei um so schneller sein, je höher die Abtastrate, d. h. je kürzer der zeitliche Abstand zwischen zwei Abtastungen gewählt ist. Augenscheinlich wird die Bedeutung dieser Vervielfältigung der Abtastrate, wenn man die beim geschalteten Gleichfeld bekannte, bei $16\frac{2}{3}$ bis $6\frac{1}{4}$ liegende Zahl der Abtastungen pro Sekunde mit den Abtastraten nach der Erfindung vergleicht. So ergeben sich bei einer Störfrequenz von 50 Hz und nur einer Frequenzverdoppelung gemäss der Erfindung bereits 100 Hz und damit bei zweimaliger Abtastung je Erregerperiode 200 Abtastungen pro Sekunde und bei einer Vervierfachung der Frequenz bereits 400 Abtastungen pro Sekunde. Der zeitliche Abstand zwischen diesen Abtastungen beträgt hierbei nur 5 ms oder nur noch $2\frac{1}{2}$ ms, so dass jetzt auch plötzliche Durchflussänderungen sicher erfasst werden können und bei der Dosierung von Flüssigkeiten für jeden Dosiertakt eine ausreichend grosse Zahl von Messsignalen zur Verfügung steht.

Da der Messwert jetzt innerhalb einer Störspannungsperiode mehrfach abgetastet wird, kann die Störwechselspannung nicht mehr nach dem als bekannt vorausgesetzten Verfahren eliminiert werden. Die weiteren Verfahrensmerkmale des Anspruchs 1 zeigen deshalb im Zusammenwirken mit den zuvor erläuterten Verfahrensschritten einen neuen Weg zur Kompensation der in der Messspannung enthaltenen Störspannungsanteile, durch den die Abtastzeit unabhängig von der Störspannungsperiode frei wählbar ist und die Eliminierung der Störwechselspannung in überraschend einfacher Weise gleichzeitig mit der Kompensation der Störgleichspannung erfolgen kann. So wurde zunächst gefunden, dass bei viermaliger, achtmaliger oder entsprechend vielfacher Abtastung der Messspannung je Störspannungsperiode und einem konstanten zeitlichen Abstand zwischen den Abtastungen, die sich während der zweiten Störhalbperiode ergebenden anteiligen Integrationswerte der Störwechselspannung entgegengesetzt gleich den während der ersten Störhalbperiode aufgenommenen, anteiligen Integrationswerten sind, so dass sich alle anteiligen Integrationswerte der Störwechselspannung während einer Störperiode durch Addieren gegeneinander aufheben lassen.

Da sich bei einem einfachen Addieren der Integrationswerte jedoch auch die sich ständig umkehrenden Nutzspannungsanteile gegeneinander aufheben und ausserdem die sich nicht umkehrenden Störgleichspannungswerte addieren würden, wird die Messspannung für jede zweite Abtastung umgepolt oder jeder zweite aufgenommene Integrationswert mit einem umgekehrten Vorzeichen versehen. Dadurch ergibt sich bei der Addition der Integrationswerte eine Aufhebung der positiven und der invertierten Störgleichspannungsanteile, während die Nutzspannungsanteile sich jetzt durch die abwechselnde Umkehrung der Vorzeichen zu dem entsprechenden geradzahligen Vielfachen addieren. Es wurde hierbei erkannt, dass die Umkehrung des Vorzeichens für jeden zweiten Integrationswert sich nicht nachteilig auf die Kompensation der Störwechselspannungsanteile auswirkt, da bei viermaliger, achtmaliger oder entsprechend vielfacher Abtastung der Messspannung während jeder Störwechselspannnungsperiode die in der ersten Störhalbperiode auftretende Vorzeichenumkehr des abgegriffenen Störwechselspannungswertes sich in der zweiten Störhalbperiode für den im Abstand einer Halbperiode auftretenden entgegengerichtet gleichen Störwechselspannungswert wiederholt, so dass sich jetzt wieder gleichgrosse entgegengerichtete Störwechselspannungsanteile ergeben, die sich bei der Addition der Integrationswerte gegeneinander aufheben. Dadurch lassen sich beim Addieren in einem einzigen Verfahrensschritt sowohl die Störgleichspannungsanteile als auch die Störwechselspannungsanteile kompensieren, so dass die reine Nutzspannung übrig bleibt.

Da die Abtastzeit jetzt unabhängig von der Periodendauer der Störwechselspannung ist, kann sie sehr kurz gehalten werden, so dass auch der Erregerstrom nur kurzzeitig eingeschaltet zu werden braucht. Dadurch lässt sich der für die Erregung des magnetischen Feldes erforderliche Aufwand an elektrischer Energie verringern.

Wird eine besonders hohe Einsparung an elektrischer Energie angestrebt und nimmt man dafür eine etwas niedrigere Abtastrate in Kauf, so empfiehlt sich das Verfahren nach Patentanspruch 2, bei dem die Messspannung während einer sich aus mehreren Störspannungsperioden ergebenden Additionsperiode viermal oder mit dem ganzzahligen Vielfachen hiervon periodisch abgetastet wird. Die Integrationswerte werden hier nicht wie beim Verfahren nach Anspruch 1 über eine Störspannungsperiode, sondern jeweils über die sich aus mehreren Störspannungsperioden ergebende Additionsperiode addiert. Auch bei diesem Verfahren heben sich die Störwechselspannungsanteile beim Addieren der Integrationswerte während einer Additionsperiode gegeneinander auf und auch die Störgleichspannungsanteile werden aufgrund der abwechselnden Umkehrung der Vorzeichen eliminiert. Durch die Abtastung der langen, aus mehreren Störspannungsperioden gebildeten Additionsperiode kann mit wenigen Abtastungen pro Sekunde und damit mit noch geringeren Einschaltzeiten für den Erregerstrom gearbeitet werden.

Ist nur eine Störspannungsfrequenz vorhanden, ist die im Verfahren nach Anspruch 2 vorgesehene Additionsperiode entsprechend der Weiterentwicklung dieses Verfahrens gemäss Anspruch 3 aus einem ungeradzahlig Vielfachen, insbesondere dem Dreifachen einer Störspannungsperiode zu bilden. Bei einer solchen aus einer ungeraden Anzahl von Störperioden bestehenden Additionsperiode lassen sich während der Addition der Integrationswerte die Störwechselspannungsanteile zusammen mit den Störgleichspannungsanteilen bereits sicher kompensieren, wenn während der Additionsperiode nur viermal abgetastet wird. Bei einer entsprechend höheren Abtastrate von 8, 12, oder noch mehr Abtastungen je Additionsperiode ergibt sich eine entsprechende höhere Auflösung des Messwertes.

Die entgegengesetzt gleichen Störspannungswerte treten hierbei nach einer ungeraden ganzen Zahl von Störhalbwellen, d. h. bei einer aus drei Störperioden gebildeten Additionsperiode nach drei Halbwellen und bei einer aus fünf Störperioden gebildeten Additionsperiode nach fünf Störhalbwellen auf.

Mit dem erfindungsgemässen Durchflussmessverfahren nach Anspruch 2 lässt sich eine Eliminierung der Störwechsel- und Störgleichspannungen auch erzielen, wenn mehrere Störwechselspannungen mit unterschiedlichen Frequenzen vorhanden sind. Hier wird entsprechend dem Verfahren nach Anspruch 4 vorgeschlagen, die Additionsperiode so lang zu wählen, dass in ihr alle vorkommenden Störspannungsperioden mit dem Einfachen oder dem ganzzahligen Vielfachen enthalten sind und die Messspannung während der Dauer der längsten vorkommenden Störspannungsperiode viermal oder mit den ganzzahligen Vielfachen hiervon periodisch abgetastet wird.

Ist beispielsweise eine Störwechselspannung mit einer Netzfrequenz von 50 Hz vorhanden und wird ausserdem eine weitere Störwechselspannung mit der Bahnfrequenz von 16⅔ Hz angenommen und weiter vorausgesetzt, dass noch eine dritte Störwechselspannung mit einer Frequenz von 25 Hz besteht, so ergeben sich für diese drei verschiedenen Frequenzen Störperiodendauern von 20 ms, 60 ms und 40 ms. Die Additionsperiode würde in diesem Fall wie bei der Berechnung eines gemeinsamen Nenners 120 ms betragen, da die 20 ms-Störperiode hierin sechsmal, die 60 ms-Störperiode zweimal und die 40 ms-Störperiode dreimal enthalten ist. Die Messspannung ist in diesem Fall mindestens achtmal während der Additionsperiode abzutasten, da die längste Störspannungsperiode 60 ms beträgt und mindestens viermal abzutasten ist. Unter diesen Voraussetzungen werden die abgegriffenen Störwechselspannungsanteile der drei unterschiedlichen Störfrequenzen während der Addition der einzelnen Integrationswerte gleichzeitig in ihrer Gesamtheit kompensiert. Durch die abwechselnde Änderung des Vorzeichens der Messspannung oder der Integrationswerte werden auch hier gleichzeitig die Störgleichspannungsanteile eliminiert.

Dadurch, dass gemäss dem Verfahrensanspruch 5 der periodisch pulsierende Gleichstrom der Erregerwicklung durch Umpolung der Stromrichtung erzeugt wird und die Einschaltdauer des Erregerstromes wesentlich kürzer als dessen Halbperiode ist, lassen sich gleichgrosse entgegengerichtete Messwerte mit kurzen Abtastzeiten abgreifen und die für die Erregung des Feldes notwendige elektrische Energie wird erheblich geringer. Durch das Verfahren nach Anspruch 6 ergeben sich auch unter Berücksichtigung der Einschwingzeit für das magnetische Feld die kürzesten Einschaltzeiten für den Erregerstrom.

Eine zweckmässige elektrische Schaltung zur Eliminierung der Störspannungen nach den Verfahren der Ansprüche 1 bis 6 wird in den Merkmalen des Anspruchs 7 gesehen, wobei sich durch die Zusammenfassung dieser Schaltung in zwei Schaltungsgruppen ein besonders einfacher und übersichtlicher Schaltungsaufbau ergibt.

Über die spezielle Umpolschaltung nach Anspruch 8 kann die Messspannung vor dem Integrieren in einfacher Weise zunächst in unveränderter Form und bei der nächsten Abtastung mit invertiertem Vorzeichen zur Integrationsschaltung nach Anspruch 9 weitergeleitet werden, in der die während der Abtastzeit anstehende Messspannung integriert und dieser Integrationswert während der folgenden Abtastphase gespeichert wird. Der bei der nächsten Abtastung integrierte Wert wird dem gespeicherten Integrationswert zuaddiert und die Summe wird bis zur nächsten Abtastung gespeichert, so dass in diesem Integrator alle Abtastwerte einer Additionsperiode integriert, gespeichert und gleichzeitig addiert werden und weder zusätzliche Speicher noch zusätzliche Addierschaltungen benötigt werden.

Verschiedene Diagramme zur Verdeutlichung der Störspannungskompensation nach den erfindungsgemässen Verfahren sowie ein Ausführungsbeispiel für die elektrische Schaltung zur Durchführung der Verfahren werden in der Zeichnung dargestellt. Es zeigen:

Fig. 1 ein Diagramm über die Zusammenhänge zwischen dem pulsierenden Erregerstrom, den Abtastungen und der Störspannungsperiode beim Durchflussmessverfahren nach Anspruch 1;

Fig. 2 ein Diagramm über die Zusammenhänge zwischen dem pulsierenden Erregerstrom, den Abtastungen und einer aus drei Störperioden gebildeten Additionsperiode beim Verfahren nach Anspruch 3 mit achtmaliger Abtastung;

Fig. 3 ein Diagramm entsprechend Fig. 2, jedoch mit nur viermaliger Abtastung während der Additionsperiode;

Fig. 4 ein Diagramm über die Zusammenhänge zwischen dem pulsierenden Erregerstrom, den Abtastungen und der Additionsperiode beim Verfahren nach Anspruch 4 mit drei unterschiedlichen Störwechselspannungen, und

Fig. 5 eine zur Durchführung der Verfahren geeignete elektrische Schaltung.

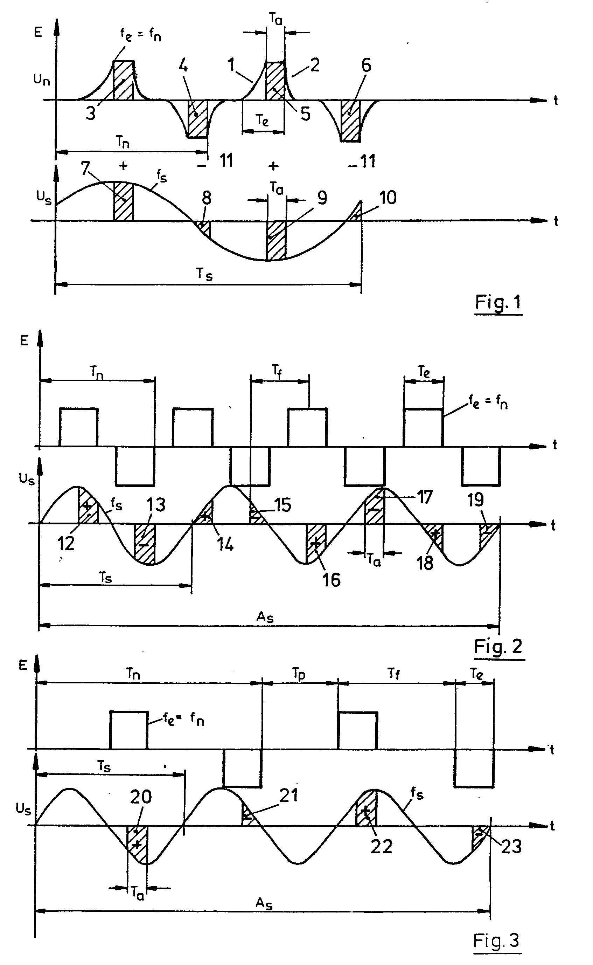

Bei dem in der Fig. 1 gezeigten Diagramm ist im oberen Koordinatensystem der Erregerstrom E und im unteren Koordinatensystem die Störwechselspannung $U_s$ als Funktion von der Zeit t für die Durchflussmessverfahren nach Anspruch 1 dargestellt, bei dem die Erregerfrequenz $f_e$ beispielsweise das Doppelte der Störspannungsfrequenz $f_s$ beträgt. Die Messspannung U, die aus der dem Erregerstrom E proportionalen Nutzspannung $U_n$ sowie der Störwechselspannung $U_s$ und der Störgleichspannung $U_g$ besteht, wird während einer Störspannungsperiode $T_s$ viermal über eine konstante Abtastzeit $T_a$ periodisch abgetastet und integriert. Die Abtast- bzw. Integrationszeit $T_a$ ist hierbei unabhängig von der Störperiodendauer $T_s$ und dann sehr kurz gewählt werden, wobei auch die Einschaltdauer $T_e$ des Erregerstromes E wesentlich kürzer als dessen Halbperiode ist. Der Kurvenverlauf des geschalteten Gleichfeldes wird hierbei durch die bei der Einschaltung bzw. Abschaltung des Erregerstromes E auftretende Trägheit des Magnetfeldes beeinflusst, wie der Einschwingabschnitt 1 und der Nachschwingabschnitt 2 des Feldverlaufs erkennen lässt, der auch dem Verlauf der Nutzspannung $U_n$ entspricht.

Da sich während einer Störspannungsperiode $T_s$ zwei Nutzspannungsperioden $T_n$ ergeben und die Abtastung der Messspannung U während jeder Nutzspannungshalbperiode erfolgt, fallen für den Nutzspannungsanteil $U_n$ die vier Abtastwerte 3, 4, 5 und 6 während einer Störspannungsperiode $T_s$ an. Die Abtastzeit $T_a$ liegt hierbei innerhalb der nutzbaren Einschaltzeit des Erregerstromes E, die sich aus der um den Einschwingvorgang 1 reduzierten Einschaltdauer $T_e$ ergibt. Die über die Abtastzeit $T_a$ abgegriffenen Nutzspannungswerte

3, 4, 5 und 6 stellen mit ihrer schraffierten Fläche die Integrationswerte für den Nutzspannungsanteil dar, die sich durch die Umpolung jedes zweiten Integrationswertes 4 und 6 bei der Addition summieren.

Während der in der unteren Hälfte der Fig. 1 gezeigten Störspannungsperiode $T_s$ enthält die viermal abgegriffene Messspannung die unterschiedlichen Störwechselspannungsabschnitte 7, 8, 9 und 10, die mit ihrer schraffierten Fläche ebenfalls die Integrationswerte für den Störwechselspannungsanteil $U_s$ darstellen. Die vier Integrationswerte 7, 8, 9 und 10 heben sich bei ihrer Addition gegeneinander auf, da der positive Integrationswert 7 der ersten Halbwelle genau so gross wie der negative Integrationswert 9 der zweiten Halbwelle ist und der negative Integrationswert 8 genau so gross wie der positive Integrationswert 10 ist. Diese Eliminierung der Störspannungsanteile ist dadurch gewährleistet, dass der zeitliche Abstand zwischen den beiden Abtastwerten 7 und 9 bzw. 8 und 10 genau eine halbe Störperiode beträgt, also um 180° phasenverschoben ist. Die entgegengesetzten beiden Abtastwerte 7/9 und 8/10 liegen damit an der gleichen Stelle der Halbwellen.

Die Umkehrung des Vorzeichens 10 für jeden zweiten Integrationswert wirkt sich hierbei nicht nachteilig auf die Eliminierung der Störwechselspannung $U_s$ aus, da die Abtastwerte 7/9 ihre Vorzeichen beibehalten und sich damit aufheben, während die Abtastwerte 8/10 beide umgekehrte Vorzeichen enthalten und sich dadurch bei der Addition wieder eliminieren. Die nicht dargestellten Störgleichspannungswerte $U_g$ werden durch die Umpolung jedes zweiten Vorzeichens jetzt ebenfalls bei der Addition eliminiert, so dass die reine Nutzspannung $U_n$ übrigbleibt.

Die Fig. 2 zeigt ein Diagramm für ein Durchflussmessverfahren nach Anspruch 2, bei dem die Messspannung U während einer sich aus drei Störspannungsperioden $T_s$ ergebenden Additionsperiode $A_s$ achtmal periodisch abgetastet wird. Der pulsierende Verlauf des Erregerstromes E ist hier vereinfacht und mit verlängerter Einschaltzeit $T_e$ dargestellt, damit die sich während der Abtastzeiten ergebenden Störwechselspannungswerte anschaulicher werden. Auch der während jeder Nutzspannungshalbperiode abgetastete Nutzspannungswert $U_n$ ist hier nicht besonders eingezeichnet. Die Abtastungen erfolgen im Endbereich der Einschaltdauer $T_e$ und die abgetasteten Störwechselspannungswerte 12 bis 19 sind zusammen mit der Vorzeichenänderung in der Störwechselspannungskurve $U_s$ eingezeichnet. Im Gegensatz zum Verfahren nach Anspruch 1 beträgt die Erregerfrequenz $f_e$ bzw. die Nutzfrequenz $f_n$ hier nur 4/3 der Störfrequenz $f_s$, so dass zwar der zeitliche Abstand zwischen zwei Abtastungen $T_f$ grösser, dafür aber die Einschaltzeiten $T_e$ des Erregerstromes E kürzer werden.

Obwohl bei diesem Verfahren keine paarweise Abtastung je Störhalbperiode mehr erfolgt, heben sich auch hier alle Integrationswerte 12 bis 19 bei ihrer Addition gegeneinander auf. So sind der Abschnitt 12 und der nach drei Störhalbperioden abgegriffene Abschnitt 16 umgekehrt gleich gross und das gleiche gilt für die Abschnitte 13/17, 14/18 und 15/19. Diese Eliminierung der Störwechselspannungsanteile $U_s$ wird auch nicht durch die Umpolung jedes zweiten Vorzeichens beeinträchtigt, da die Abschnitte 12/16 sowie 14/18 ihre Vorzeichen behalten, während jeweils die Abschnittspaare 13/17 und 15/19 umgepolt werden, so dass diese Abtastwerte entgegengerichtet gleich bleiben. Durch die geradzahlige Abtastung während der Additionsperiode $A_s$ und die Umpolung jedes zweiten Abtastwertes ist auch hier gewährleistet, dass sich die Gleichspannungsanteile $U_g$ beim Addieren gegeneinander aufheben und sich das reine Nutzspannungssignal $U_n$ ergibt.

Bei dem in der Fig. 3 gezeigten Ausführungsbeispiel wird die Messspannung U während einer sich aus drei Störperioden $T_s$ ergebenden Additionsperiode $A_s$ nur viermal abgetastet, wodurch sich die zeitlichen Abstände $T_f$ zwischen den einzelnen Abtastungen und damit bei gleichbleibender kurzer Einschaltzeit $T_e$ besonders die Einschaltpausen $T_p$ erheblich vergrössern. Auch hier heben sich die vier abgetasteten Störwechselspannungsanteile 20 bis 23 bei der Addition gegeneinander auf, da der Integrationswert 20 und der nach drei Störhalbwellen abgetastete Integrationswert 22 umgekehrt gleich sind und auch die Integrationswerte 21 und 23 einen zeitlichen Abstand von drei Störhalbwellen aufweisen und sich somit kompensieren. Trotz der Vorzeichenumkehrung der beiden Integrationswerte 21 und 23 bleibt die Eliminierung auch hier bestehen. Die Nutzfrequenz $f_n$ ist in diesem Fall sogar kleiner als die Störfrequenz $f_s$, denn sie beträgt nur 2/3 der Störfrequenz.

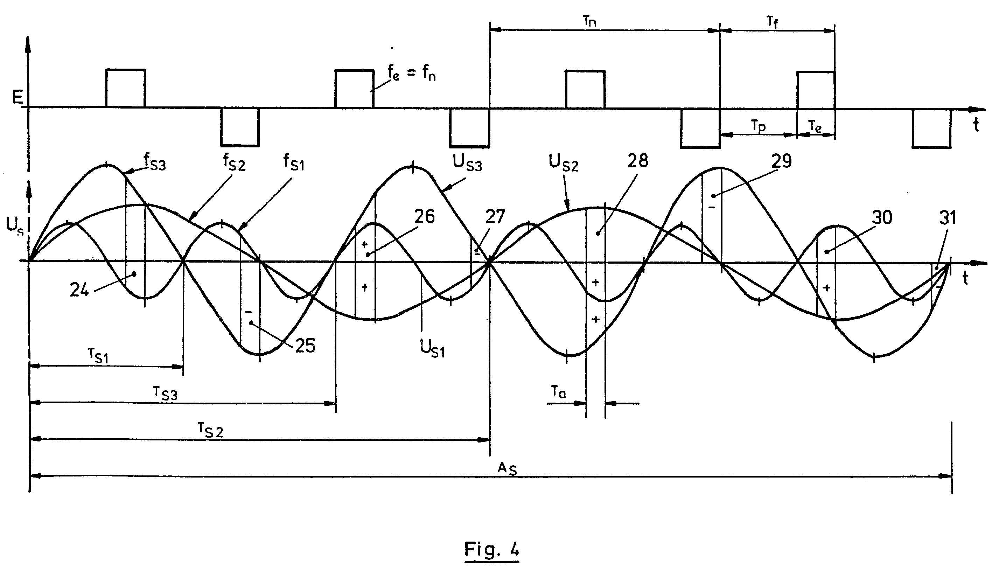

Die Fig. 4 verdeutlicht die Eliminierung bei Vorhandensein von drei verschiedenen Störwechselspannungen, die die Kurven $U_{s1}$, $U_{s2}$ und $U_{s3}$ mit den unterschiedlichen Frequenzen $f_{s1}$, $f_{s2}$ und $f_{s3}$ aufzeigen. Hierbei wurde $f_{s1}$ mit 50 Hz, $f_{s2}$ mit 16⅔ Hz und $f_{s3}$ mit 25 Hz angenommen, so dass sich Störperiodendauern $T_{s1}$ von 20 ms, $T_{s2}$ von 60 ms und $T_{s3}$ von 40 ms ergeben. Da sich die Störfrequenzen $f_{s1}:f_{s2}:f_{s3}$ wie 1:⅓:½ verhalten, ist entsprechend dem Verfahren nach Anspruch 4 der grösste gemeinsame Teiler 6, so dass die Additionsperiode $A_s$ aus sechs Störperioden $T_{s1}$ gebildet wird und 120 ms beträgt. Die Störperiode $T_{s2}$ ist zweimal und die Störperiode $T_{s3}$ ist dreimal in der Additionsperiode $A_s$ enthalten. Während der längsten Störspannungsperiode $T_{s2}$ wird entsprechend dem Verfahren nach Anspruch 4 viermal abgetastet, so dass die Störwechselspannungen während einer Additionsperiode achtmal, d.h. in den Zeitabschnitten 24 bis 31 abgetastet werden.

Betrachtet man die Verhältnisse für jede einzelne Störspannung getrennt, so ergeben sich für die Störspannung $U_{s1}$ entgegengesetzt gleiche Integrationswerte zu den Zeitabschnitten 24/26 und 25/27 sowie 28/30 und 29/31, so dass sich alle Störwechselspannungsanteile $U_{s1}$ gegeneinander aufheben. Bei der Störspannung $U_{s2}$ ergeben sich die sich gegeneinander aufhebenden Abtastpaare 24/26 und 25/27 sowie 28/30 und 29/31. Bei der Störspannung $U_{s3}$ werden die für die Kompensation zusammengehörenden Abtastpaare durch die Zeitabschnitte 24/28 und 25/29 sowie 26/30 und 27/31 gebildet. Sämtliche Abtastwerte der Störwechselspannungen werden somit bei der Addition für sich eliminiert, so dass die Störspannungskompensation auch für die in Wirklichkeit auftretende Gesamtstörspannung $U_s$, die sich aus der additiven Überlagerung der Einzelstörspannungen ergibt, gilt.

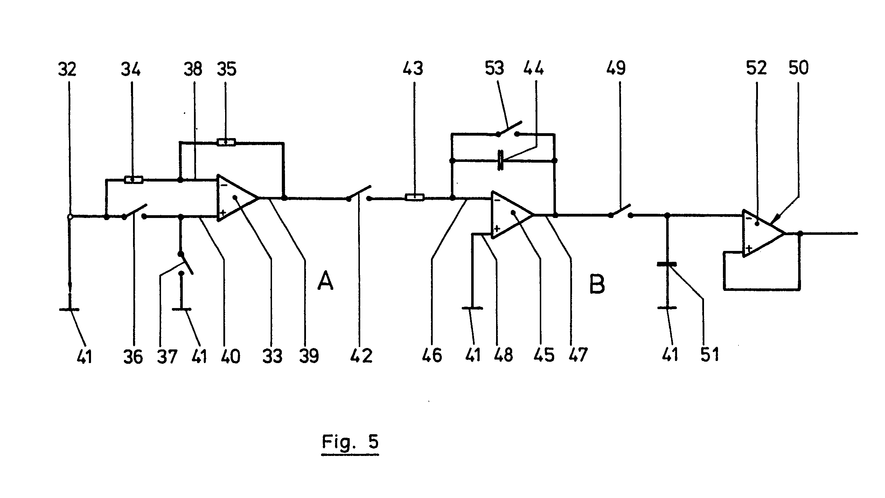

Die in der Fig. 5 gezeigte elektrische Schaltung ist im Umformer eines magnetisch-induktiven Durchflussmessers untergebracht, wobei am Eingang 32 der Schaltung die verstärkte Messspannung U anliegt, die ein Gemisch aus der Nutzspannung $U_n$, der Störwechselspannung $U_s$ und der Störgleichspannung $U_g$ ist. Die aus dem Operationsverstärker 33 und den beiden Widerständen 34 und 35 bestehende Schaltungsgruppe A wirkt in Verbindung mit den Schaltern 36 und 37 als Umpolschaltung. Der invertierende Eingang 38 des Operationsverstärkers 33 ist über den Widerstand 34 mit dem Messspannungseingang 32 und über den zweiten gleichgrossen Widerstand 35 mit dem Ausgang 39 des Operationsverstärkers 33 verbunden.

Der nichtinvertierende Eingang 40 liegt dagegen entweder über den Schalter 36 am Messspannungseingang 32 oder über den Schalter 37 am Bezugspotential 41 an. Die beiden Schalter 36 und 37 werden von einem nicht näher gezeigten Taktgenerator nach jeder Abtastung umgeschaltet. Ist der Schalter 36 geschlossen und der Schalter 37 offen, wird das Eingangssignal nicht umgepolt, sondern steht mit gleichem Vorzeichen am Ausgang 39 des Operationsverstärkers 33 an. Werden die Schalter 36 und 37 durch den Taktgenerator umgesteuert, ist Schalter 37 geschlossen und Schalter 36 offen, wobei die Schaltungsgruppe A für das Eingangssignal invertierend wirkt, so dass das Messsignal U dann mit umgekehrtem Vorzeichen am Ausgang 39 ansteht.

Der Taktgenerator steuert auch den Schalter 42, der für die Dauer der Abtastung geschlossen wird und die Abtastzeit bestimmt. Die Integrations-Schaltungsgruppe B besteht aus dem Widerstand 43, einem Integrations-Kondensator 44 und einem Operationsverstärker 45. Der invertierende Eingang 46 des Operationsverstärkers 45 ist einerseits über den Widerstand 43 und den Schalter 42 mit dem Ausgang 39 der Umpol-Schaltungsgruppe A und andererseits über den Integrations-Kondensator 44 mit dem Ausgang 46 des Operationsverstärkers 45 verbunden. Der zweite Eingang 48 des Operationsverstärkers 45 liegt auf dem Bezugspotential 41. Diese Schaltungsgruppe B integriert während jeder Abtastung die über den Schalter 42 am Ausgang 39 des Operationsverstärkers 33 anliegende Messspannung für die Dauer der jeweiligen Abtastzeit. Der Integrationswert bleibt hierbei im Kondensator 44 gespeichert und der bei der nächsten Abtastung anfallende neue Integrationswert wird dann jeweils dem oder den vorhergehenden Integrationswerten zuaddiert, so dass nach der letzten Abtastung innerhalb einer Störspannungs- oder Additionsperiode die addierten Integrationswerte am Ausgang 47 anliegen. Dieses Signal ist das von der Störwechsel- und -gleichspannung befreite, dem Durchfluss proportionale Nutzsignal.

Über den vom Taktgenerator nach jeder Additionsperiode kurzzeitig geschlossenen Abtastschalter 49 wird dieser Messwert von einer Auswertschaltung 50 aufgenommen, die aus einem Kondensator 51 und einem Impedanzwandler 52 sowie den nachgeschalteten Baugruppen für die Weiterverarbeitung des Messsignals besteht. In dem Kondensator 51 wird der Messwert bis zum Ende des nächsten Abtastzyklus gespeichert. Der Abtastschalter 49 öffnet sofort wieder und der Taktgenerator schliesst noch während der Abtastpause den Entladeschalter 53, über den der Integrations-Kondensator 44 entladen und damit die zuletzt addierte Messspannung gelöscht wird. Dieser Vorgang wiederholt sich mit jeder Additionsperiode.

**Patentansprüche**

1. Verfahren zur magnetisch-induktiven Durchflussmessung, bei dem das strömende, elektrisch leitende Medium in einem elektrisch isolierten Rohrabschnitt von einem magnetischen Feld durchsetzt wird, das von einer durch einen periodisch pulsierenden Gleichstrom gespeisten Erregerwicklung erzeugt wird, und eine induzierte, der Strömungsgeschwindigkeit proportionale Nutzspannung zusammen mit einer Störspannung während jeder Halbperiode des pulsierenden Gleichstromes über eine bestimmte Abtastzeit an zwei Elektroden des Rohrabschnitts abgetastet sowie im Umformer integriert wird und die Integrationswerte miteinander verglichen werden, wobei sich die Störwechselspannungs- und Störgleichspannungsanteile kompensieren, dadurch gekennzeichnet, dass die Frequenz ($f_e$) des pulsierenden Gleichstromes das Doppelte oder geradzahlige Vielfache der Störspannungsfrequenz ($f_s$) beträgt und die Messspannung (U) während einer Störspannungsperiode ($T_s$) viermal oder mit dem ganzzahligen Vielfachen hiervon periodisch abgetastet und über eine frei wählbare konstante Abtastzeit ($T_a$), die jedoch innerhalb der um ein auftretende Anstiegszeit (1) des erregten Magnetfeldes verminderten Einschaltzeit ($T_e$) liegt, integriert wird, wobei die Messspannung für jede zweite Abtastung umgepolt oder jeder zweite aufgenommene Integrationswert mit einem umgekehrten Vorzeichen versehen wird und jeweils die sich während einer Störspannungsperiode ergebenden Integrationswerte der Erzielung der reinen, von den Störwechsel- und Störgleichspannungen ($U_s$, $U_g$) befreiten Nutzspannung ($U_n$) addiert werden.

2. Verfahren zur magnetisch-induktiven Durchflussmessung, bei dem das strömende, elektrisch leitende Medium in einem elektrisch isolierten Rohrabschnitt von einem magnetischen Feld durchsetzt wird, das von einer durch einen periodisch pulsierenden Gleichstrom gespeisten Erregerwicklung erzeugt wird, und eine induzierte, der Strömungsgeschwindigkeit proportionale Nutzspannung zusammen mit einer Störspannung während jeder Halbperiode des Erregerstromes über eine bestimmte Abtastzeit an zwei Elektroden des Rohrabschnitts abgetastet sowie im Umformer integriert wird und die Integrationswerte miteinander verglichen werden, wobei sich die Störwechselspannungs- und Störgleichspannungsanteile kompensieren, dadurch gekennzeichnet, dass die Messspannung (U) während einer sich aus mehreren Störspannungsperioden $(T_s)$ ergebenden Additionsperiode $(A_s)$ viermal oder mit dem ganzzahligen Vielfachen hiervon periodisch abgetastet und über eine frei wählbare konstante Abtastzeit $(T_a)$, die jedoch innerhalb der um eine auftretende Anstiegszeit (1) des erregten Magnetfeldes verminderten Einschaltzeit $(T_e)$ liegt, integriert wird, wobei die Messspannung für jede zweite Abtastung umgepolt oder jeder zweite aufgenommene Integrationswert mit einem umgekehrten Vorzeichen versehen wird und jeweils die sich während einer Additionsperiode $(A_s)$ ergebenden Integrationswerte zur Erzielung der reinen, von den Störwechsel- und Störgleichspannungen $(U_s, U_g)$ befreiten Nutzspannung $(U_n)$ addiert werden.

3. Durchflussmessverfahren nach Anspruch 2, dadurch gekennzeichnet, dass bei Vorhandensein von nur einer Störspannungsfrequenz $(f_s)$ die Additionsperiode $(A_s)$ aus einem ungeradzahlig Vielfachen, insbesondere dem Dreifachen einer Störspannungsperiode $(T_s)$ gebildet wird.

4. Durchflussmessverfahren nach Anspruch 2, dadurch gekennzeichnet, dass bei Vorhandensein von mehreren Störwechselspannungen mit unterschiedlichen Frequenzen $(f_{s1}, f_{s2}, f_{s3})$ die Additionsperiode $(A_s)$ so lange ist, dass in ihr alle vorkommenden Störspannungsperioden $(T_{s1}, T_{s2}, T_{s3})$ mit dem Einfachen oder dem ganzzahligen Vielfachen enthalten sind und die Messspannung (U) während der Dauer der längsten vorkommenden Störspannungsperiode $(T_{s2})$ viermal oder mit dem ganzzahligen Vielfachen hiervon periodisch abgetastet wird.

5. Durchflussmessverfahren nach Anspruch 1 oder einem der Ansprüche 2 bis 4, dadurch gekennzeichnet, dass der periodisch pulsierende Gleichstrom der Erregerwicklung durch Umpolung der Stromrichtung erzeugt wird und die Einschaltdauer $(T_e)$ des pulsierenden Gleichstromes (E) wesentlich kürzer als dessen Halbperiode ist.

6. Durchflussmessverfahren nach Anspruch 5, dadurch gekennzeichnet, dass die Abtastung jeweils im Endbereich der Einschaltdauer des pulsierenden Gleichstromes erfolgt.

7. Elektrische Schaltung zur Durchführung der Verfahren nach den Ansprüchen 1 bis 6, dadurch gekennzeichnet, dass der für die Eliminierung der Störspannungen $(U_s, U_g)$ benötigte Schaltungsteil aus einer die Messspannung (U) aufnehmenden Umpol-Schaltungsgruppe (A) und einer nachgeschalteten, die Integration, Speicherung und Addition durchführenden Integrations-Schaltungsgruppe (B) besteht, deren Ausgang (47) mit einer nachfolgenden Auswertschaltung (50) verbunden ist.

8. Elektrische Schaltung nach Anspruch 7, dadurch gekennzeichnet, dass die Umpol-Schaltungsgruppe (A) einen Operationsverstärker (33) aufweist, dessen invertierender Eingang (38) über einen Widerstand (34) mit dem Messspannungseingang (32) und über einen zweiten gleichgrossen Widerstand (35) mit dem Ausgang (39) des Operationsverstärkers (33) verbunden ist und dessen nichtinvertierender Eingang (40) entweder über einen Schalter (36) am Messspannungseingang (32) oder über einen zweiten Schalter (37) am Bezugspotential (41) anliegt, wobei die beiden Schalter (36, 37) von einem Taktgenerator nach jeder Abtastung umgeschaltet werden.

9. Elektrische Schaltung nach einem der Ansprüche 7 und 8, dadurch gekennzeichnet, dass die Integrations-Schaltungsgruppe (B) einen Operationsverstärker (45) aufweist, dessen invertierender Eingang (46) einerseits über einen Widerstand (43) und einen vorgeschalteten, während jeder Abtastung vom Taktgenerator in Schliessstellung gebrachten Schalter (42) mit dem Ausgang (39) der Umpol-Schaltungsgruppe (A) und andererseits über einen Integrations-Kondensator (44) mit dem Ausgang (47) des Operationsverstärkers (45) verbunden ist und dessen zweiter Eingang (48) auf dem Bezugspotential (41) liegt, wobei am Ausgang (47) des Operationsverstärkers (45) ein Abtastschalter (49) und parallel zum Integrations-Kondensator (44) ein Entladeschalter (53) vorgesehen sind, die vom Taktgenerator so gesteuert werden, dass die aufaddierten Integrationswerte nach jeder Additionsperiode über den Abtastschalter (49) kurzzeitig an eine Auswertschaltung (50) weitergeleitet werden und anschliessend noch während der Abtastpause der Integrations-Kondensator (44) über den Entladeschalter (53) entladen wird.

**Claims**

1. Method for magneto-inductive throughflow measurement, in which the flowing electrically conductive medium is permeated by a magnetic field within an electrically insulated pipe section, said field being generated by an excitation winding supplied with a cyclically pulsing direct current, and an induced useful voltage proportional to the flow velocity is scanned together with an interference voltage during each half-cycle of the pulsating direct current over a specific scanning period on two electrodes of the pipe section, as well as being integrated in the transducer and the integration values being compared to each other, the interference alternating voltage and intereference direct voltage components cancelling each other out, characterized in that the frequency $(f_e)$ of the pulsating direct current amounts to twice or to an integral multiple of the interference voltage frequency $(F_s)$ and the measuring voltage (U) is scanned four times during an interference voltage

cycle ($T_s$) or an integral multiple of said four times and is integrated over a freely selectible constant scanning period ($T_a$) which however lies within the starting period ($T_e$) reduced by an intervening rise time (1) of the energised magnetic field, the measuring voltage being reversely polarised for every second scanning or each second integration value picked up being provided with an inverted sign, and the integrations values resulting during an interference voltage cycle being added to obtain the pure useful voltage ($U_n$) denuded of the alternating and direct interference voltages ($u_s$, $U_g$).

2. Method for magneto-inductive throughflow measurement, in which the flowing, electrically conductive medium is permeated by a magnetic field within an electrically insulated pipe section, said field being generated by an excitation winding supplied with a cyclically pulsing direct current, and an induced useful voltage proportional to the flow velocity is scanned together with an interference voltage during each half-cycle of the exciting current over a specific scanning period on two electrodes of the pipe section, as well as being integrated in the transducer and the integration values being compared to one another, the interference alternating voltage and interference direct voltage components cancelling each other out, characterised in that the measuring voltage (U) is scanned cyclically four times or an integral multiple of the said number of times during an addition period ($A_s$) resulting from several interference voltage periods ($T_s$) and is integrated over a freely selectible constant scanning period ($T_a$) which however lies within the starting period ($T_e$) reduced by an intervening rise time (1) of the energised magnetic field, the measuring voltage being reversely polarised for every scanning or each second integration value picked up being provided with an inverted sign, and the integration values resulting during an addition period ($A_s$) being added to obtain the pure useful voltage ($U_n$) denuded of the alternating and direct interference voltages ($U_s$, $U_g$).

3. Throughflow measuring method according to claim 2, characterized in that in the presence of one stray voltage frequency ($f_s$) only, the addition period ($A_s$) is formed by an odd multiple, in particular, three times an interference voltage period ($T_s$).

4. Throughflow measuring method according to claim 2, characterized in that in the presence of several alternating interference voltages having different frequencies ($f_{s1}$, $f_{s2}$, $f_{s3}$), the addition period ($A_s$) is so long that it contains all the intervening interference voltage periods ($T_{s1}$, $T_{s2}$, $T_{s3}$) within the single or integral multiple period and that the measuring voltage (U) is scanned cyclically four times or an integral multiple number of said four time during the duration of the longest interference voltage period ($T_{s2}$) occurring.

5. Throughflow measuring method according to claim 1 or one of the claims 2 to 4, characterized in that the cyclically pulsing direct current of the excitation winding is generated by alternating the direction of the current and that the duty period ($T_e$) of the pulsing direct current (E) is substantially shorter than its half-cycle.

6. Throughflow measuring method according to claim 5, characterized in that the scanning is performed in each case within the final duration of the duty period of the pulsing direct current.

7. Electrical circuit for application of the method according to claims 1 to 6, characterized in that the circuit section required for elimination of the interference voltages ($U_s$, $U_g$) comprises an inverter circuit stage (A) receiving the measuring voltage (U) and a postconnected integration circuit assembly (B) performing the integration, storage and summation, the output (47) of which is connected to a subsequent evaluator circuit (50).

8. Electrical circuit according to claim 7, characterized in that the inverter circuit stage (A) comprises an operational amplifier (33) the inverting input (38) of which is coupled via a resistor (34) to the measuring voltage input (32) and via a second identically rated resistor (35) to the output (39) of the operational amplifier (33), and its non-inverting input (40) is connected either to the measuring voltage input (32) via a switch (36) or via a second switch (37) to the reference voltage (41), the two switches (36, 37) being switched over by means of a clock generator after each scanning.

9. Electrical circuit according to one of the claims 7 and 8, characterized in that the integrating circuit assembly (B) has an operational amplifier (45) the inverting input (46) of which is connected on the one hand to the output (39) of the inverting circuit stage (A) via a resistor (43) and a preconnected switch (42) placed in the closed position during each scanning by the clock generator, and on the other hand via an integration capacitor (44) to the output (47) of the operational amplifier (45) and the second input (48) of which is connected to the reference voltage (41), a scanning switch (49) being provided at the output (47) of the operational amplifier (45) and a discharger switch (53) being provided parallel to the integration capacitor (44), which are so controlled by the clock generator that the summated integration values are briefly transmitted onwards to an evaluator circuit (50) via the scanning switch (49) after each addition period, and that the integration capacitor (44) is discharged via the discharger switch (53) subsequently, still during the scanning interval.

**Revendications**

1. Procédé de mesure magnéto-inductive de débits, selon lequel le fluide électriquement conducteur en écoulement, présent dans un tronçon de tube isolé électriquement, est traversé par un champ magnétique qui est produit par un enroulement d'excitation alimenté par un courant continu pulsatoire périodique, et une tension utile induite, proportionnelle à la vitesse d'écoulement, est explorée, conjointement avec une tension parasite, au cours de chaque alternance du courant continu pulsatoire, pendant un intervalle de temps déterminé d'exploration, entre deux électrodes du tronçon du tube et est intégrée dans un convertisseur et les valeurs d'intégration sont comparées entre elles, auquel cas les composantes de la tension alternative parasite et les composantes de la tension continue parasite se compensent, caractérisé en ce que la fréquence ($f_e$) du courant continu pulsatoire est égale au double ou à un multiple pair de la fréquence ($f_s$) de la tension parasite, et la tension de mesure (U) est explorée périodiquement quatre fois ou un multiple entier de fois ce nombre, pendant une période ($T_s$) de la tension parasite, et est intégrée pendant un intervalle de temps constant d'exploration ($T_a$) pouvant être choisi librement, mais se situant à l'intérieur de l'intervalle de temps de branchement ($T_e$) diminué d'une durée de croissance (1), qui apparaît, du champ magnétique excité, auquel cas la polarisation de la tension de mesure est inversée lors d'une exploration sur deux ou bien une valeur d'intégration enregistrée sur deux est affectée d'un signe inverse et les valeurs d'intégration, qui apparaissent chaque fois pendant une période de la tension parasite, sont additionnées de manière à fournir la tension utile pure ($U_n$) exempte des tensions alternatives parasites et des tensions continues parasites ($U_s$, $U_g$).

2. Procédé de mesure magnéto-intuctive de débits, selon lequel le fluide électriquement conducteur en écoulement, présent dans un tronçon de tube isolé électriquement, est traversé par un champ magnétique qui est produit par un enroulement d'excitation alimenté par un courant continu pulsatoire périodique, et une tension utile induite, proportionnelle à la vitesse d'écoulement, est explorée, conjointement avec une tension parasite, au cours de chaque alternance du courant d'excitation, pendant un intervalle de temps déterminé d'exploration, entre deux électrodes de tronçon de tube et est intégrée dans un convertisseur et les valeurs d'intégration sont comparées entre elles, auquel cas les composantes de la tension alternative parasite et les composantes de la tension continue parasite se compensent, caractérisé en ce que la tension de mesure (U) est explorée périodiquement quatre fois ou un multiple entier de fois ce nombre pendant une période d'addition ($A_s$) formée de plusieurs périodes ($T_s$) de la tension parasite, et est intégrée pendant un intervalle de temps constant d'exploration ($T_a$) pouvant être choisi librement, mais se situant à l'intérieur de l'intervalle de temps de branchement ($T_e$) diminué d'une durée de croissance (1), qui apparaît, du champ magnétique excité, auquel cas la polarisation de la tension de mesure est inversée lors d'une exploration sur deux ou bien une valeur d'intégration enregistrée sur deux est affectée d'un signe inverse et les valeurs d'intégration, qui apparaissent chaque fois pendant une période d'addition ($A_s$), sont additionnées de manière à fournir la tension utile pure ($U_n$) exempte des tensions alternatives parasites et des tensions continues parasites ($U_s$, $U_g$).

3. Procédé de mesure de débits selon la revendication 2, caractérisé en ce que, dans le cas de la présence d'une seule fréquence ($f_s$) de la tension parasite, la période d'addition ($A_s$) est formée par un multiple impair, notamment par le triple d'une période ($T_s$) de la tension parasite.

4. Procédé de mesure de débits selon la revendication 2, caractérisé en c que, dans le cas de la présence de plusieurs tensions alternatives parasites possédant des fréquences différentes ($f_{s1}$, $f_{s2}$, $f_{s3}$), la période d'addition ($A_s$) est si longue qu'elle contient en elle toutes les périodes ($T_{s1}$, $T_{s2}$, $T_{s3}$), qui apparaissent, de la tension parasite ou le multiple entier de ces périodes, et que la tension de mesure (U) est explorée périodiquement quatre fois ou un multiple entier de fois ce nombre pendant la durée de la période la plus longue ($T_{s2}$), qui apparaît, de la tension parasite.

5. Procédé de mesure de débits selon la revendication 1 ou l'une des revendications 2 à 4, caractérisé en ce que le courant continu plusatoire périodique de l'enroulement d'excitation est produit par inversion de la polarité de la direction du courant et que la durée de mise en circuit ($T_e$) du courant continu pulsatoire (E) est nettement inférieure à la durée de l'alternance de ce courant.

6. Procédé de mesure de débits selon la revendication 5, caractérisé en ce que l'exploration s'effectue respectivement pendant la phase terminale de la durée de mise en circuit du courant continu pulsatoire.

7. Circuit électrique pour la mise en oeuvre du procédé selon les revendications 1 à 6, caractérisé en ce que l'élément de circuit nécessaire pour la suppression des tensions paraites ($U_s$, $U_g$) est constitué par un module de circuit d'inversion de polarité (A), qui reçoit la tension de mesure (U), et qui est suivi par un module de circuit d'intégration (B), qui exécute l'intégration, la mémorisation et l'addition et dont la sortie (47) est reliée à un circuit d'évaluation (50) branché en aval.

8. Circuit électrique selon la revendication 7, caractérisé en ce que le module de circuit d'inversion de polarité (A) comporte un amplificateur opérationnel (33) dont l'entrée inverseuse (38) est reliée, par l'intermédiaire d'une résistance (34), à l'entrée de la tension de mesure et, par l'intermédiaire d'une seconde résistance identique (35), à la sortie (39) de l'amplificateur opérationnel (33) et dont l'entrée non-inverseuse (40) est raccordée soit par l'intermédiaire d'un interrupteur (36) à l'entrée (32) de la tension de mesure, soit par l'intermédiaire d'un second interrupteur (37) au potentiel de référence (41), les deux interrupteurs (36, 37) étant commutés par un générateur de cadence après chaque exploration.

9. Circuit électrique selon l'une des revendications 7 et 8, caractérisé en ce que le module de circuit d'intégration (B) comporte un amplificateur opérationnel (45), dont l'entrée inverseuse (46) est raccordée, d'une part par l'intermédiaire d'une résistance (43) et d'un interrupteur (42) monté en amont et placé dans la position fermée par le générateur de cadence pendant chaque exploration, à la sortie (39) du module de circuit d'inversion de polarité (A) et, d'autre part par l'intermé-

**0166395**

diaire d'un condensateur d'intégration (44), à la sortie (47) de l'amplificateur opérationnel (45), et dont la seconde entrée (48) est placée au potentiel de référence (41), auquel cas il est prévu, à la sortie (47) de l'amplificateur opérationnel (45), un interrupteur (49) utilisé pour l'exploration et, en parallèle avec le condensateur d'intégration (44), un interrupteur de décharge (53), ces interrupteurs étant commandés par le générateur de cadence de telle sorte que les valeurs d'intégration additionnées sont retransmises en un bref intervalle de temps à un circuit d'évaluation (50), après chaque période d'addition, par l'intermédiaire de l'interrupteur (49) utilisé pour l'exploration, et qu'ensuite le condensateur d'intégration (44) se décharge encore pendant la pause d'exploration, par l'intermédiaire de l'interrupteur de décharge (53).

0166395

Fig. 1

Fig. 2

Fig. 3

11

Fig. 4

Fig. 5

0166395